Europäisches Patentamt

European Patent Office

Office européen des brevets

(19)

(11) Veröffentlichungsnummer: **0 150 731**
**B1**

(12) **EUROPÄISCHE PATENTSCHRIFT**

(45) Veröffentlichungstag der Patentschrift:
11.10.89

(51) Int. Cl.$^4$: **A 01 B 1/06**, B 25 G 1/06

(21) Anmeldenummer: 85100205.5

(22) Anmeldetag: 10.01.85

(54) Handgerät zum Auflockern von Gartenboden.

(30) Priorität: 13.01.84 DE 3401000
28.09.84 DE 3435601

(43) Veröffentlichungstag der Anmeldung:
07.08.85 Patentblatt 85/32

(45) Bekanntmachung des Hinweises auf die Patenterteilung: 11.10.89 Patentblatt 89/41

(84) Benannte Vertragsstaaten:
AT BE CH DE FR GB IT LI NL SE

(56) Entgegenhaltungen:
EP-A- 0 005 540
EP-A- 0 053 839
CH-A- 255 015
DE-C- 483 795
FR-A- 2 070 198
GB-A- 145 983
US-A- 1 973 309

(73) Patentinhaber: Bielefelder Küchenmaschinen- und Transportgerätefabrik vom Braucke GmbH
Telgenbrink 105
D-4800 Bielefeld 15 (DE)

(72) Erfinder: vom Braucke, Hans
Karlstrasse 23
D-4973 Vlotho (DE)
Erfinder: vom Braucke, Manfred, Dipl.-Ing.
Telgenbrink 103
D-4800 Bielefeld 15 (DE)
Erfinder: Westerwelle, Dieter
Markusstrasse 9
D-4800 Bielefeld 1 (DE)

(74) Vertreter: Hoefer, Theodor, Dipl.-Ing.
Kreuzstrasse 32
D-4800 Bielefeld 1 (DE)

## Beschreibung

Die Erfindung bezieht sich auf ein Handgerät zum Auflockern, Schneiden und Krümeln von Gartenboden od. dgl. mit an einem Stiel gehaltenen Zinkensternen, die auf festen Lagerhülsen, deren Achsen V-förmig zueinanderstehen, frei drehbar gelagert sind. Die Sternzinken dieser Zinkensterne haben in Richtung der radialen Sternzinken verlaufende senkrechte Mittelebenen und sie schneiden sich unter einem spitzen Winkel.

Ein solches Handgerät ist aus der EP-A-053839 bekannt. Mit ihm läßt sich der Boden durch Zerkleinern von Klumpen auflockern, wobei die drehbar gelagerten Zinkensterne, die von der von einem Stiel gehaltenen und geführten waagerechten Achse gehalten sind, mit ihren Sternzinken in das Erdreich eindringen und je nach Neigung des Stieles schon innerhalb des Erdreichs die Klumpen zerschneiden.

Aus DE-C-483 795 ist ein aus Jätmessern, Frässtern und Harkenzinken aufgebautes Bodenbearbeitungsgerät bekannt, bei dem die feststehenden geraden Harkenzinken nur Furchen ziehen können, ohne das gelockerte Erdreich beidseits jeder Furche zu bewegen.

Dasselbe gilt auch für die Ausführung einer Egge gemäß US-A-1 973 309, deren gebogene Zinken um eine waagerechte Achse sich drehen.

Der Erfindung liegt die Aufgabe zugrunde, das Handgerät dieser Gattung dahingehend zu verbessern, daß auch das zwischen einem Paar sich kreuzender Zinkensterne befindliche Erdreich dem Scherbereich der Zinkensterne zugeführt und somit aufgelockert werden kann.

Diese Aufgabe wird erfindungsgemäß durch die Merkmale des Anspruches 1 gelöst.

Beim Überfahren eines Bodenbereichs greifen die Schaufeln der Schaufelzinken in das Erdreich ein und reißen die verfestigte obere Decke auf, wodurch sich nicht nur Furchen bilden, sondern auch das Erdreich der Furchen den benachbarten Zinkensternenpaaren zugeführt wird.

Bevorzugt ist die zentrale Achse im Querschnitt eckig ausgebildet und die Lagerhülsen der Zinkensterne, die Lagerhülse jedes Schaufelzinkens, sowie die Zwischenführungslager sind jeweils mit einer zentralen, eckigen, durchgehenden, im Querschnitt dem Achsenquerschnitt entsprechenden Mittelöffnung versehen.

Auf diese Weise ist eine Drehung der Lagerhülsen und der Zwischenführungslager um die zentrale Achse nicht möglich. Durch Verschwenken des Stieles des Handgerätes müssen sich somit auch die Lagerhülsen mit verschwenken.

Die Eindringtiefe der an den Lagerhülsen befestigten Schaufelzinken und der Schaufeln läßt sich somit wahlweise verändern. Das ist insbesondere dann von Vorteil, wenn die Schaufeln an im Erdboden befindliche Baumwurzeln gelangen, die nicht zerstört werden sollen. Durch eine flachere Einstellung des Stieles werden dann die Schaufeln aus dem Erdreich herausbewegt.

Bevorzugte Ausführungsformen der Erfindung sind in den Schutzansprüchen enthalten. Der Schutzumfang erstreckt sich nicht nur auf die beanspruchten Einzelmerkmale, sondern auch auf deren Kombination.

Ausführungsbeispiele der Erfindung sind in der Zeichnung dargestellt und werden im folgenden näher beschrieben. Es zeigen:

Fig. 1 eine Seitenansicht des Handgerätes, wobei die koaxiale Lagerhülse eines Schaufelzinkens freiliegt, in einer flachen Stellung des Stieles;

Fig. 2 das Handgerät gemäß Fig. 1 in einer steileren Stellung des Stieles;

Fig. 3 eine perspektivische Ansicht einer koaxialen Lagerhülse mit einem Schaufelzinken und einer Schaufel;

Fig. 4 einen Schnitt gemäß Linie IV-IV der Fig. 3 in vergrößerter Darstellung;

Fig. 5 eine Vorderansicht einer koaxialen Lagerhülse, an welcher zwei gleiche Schaufelzinken mit Schaufeln befestigt sind;

Fig. 6 in der Draufsicht eine schematische Darstellung der Zuordnung von Zinkensternen, Lagerhülsen und Zwischenführungslagern an der zentralen Achse;

Fig. 7 in der Draufsicht eine schematische Darstellung eines Gerätes, bei welchem sich auch die benachbarten Zinkensterne zweier nebeneinanderliegender Paare jeweils kreuzen;

Fig. 8 eine schematische Darstellung eines Gerätes, welches an den Enden der Achse rechtwinklig angeordnete Begrenzungselemente trägt, in der Draufsicht;

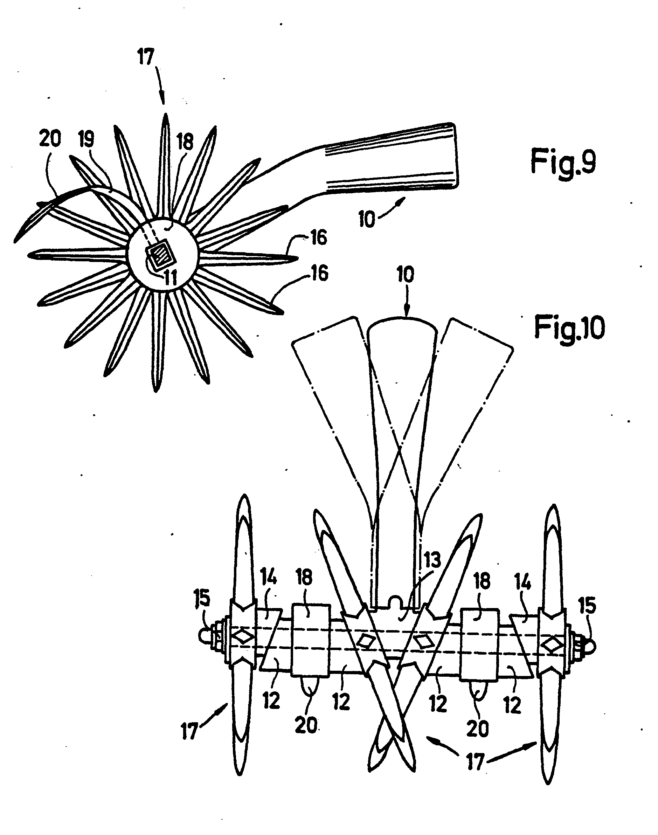

Fig. 9 eine Seitenansicht des Handgerätes mit an dem Stiel-Verbindungsstück um 180° verstellter Achse;

Fig. 10 eine Draufsicht auf das Handgerät mit der Andeutung zweier Stellungen des Verbindungsstückes nach dessen Verdrehung um 90°;

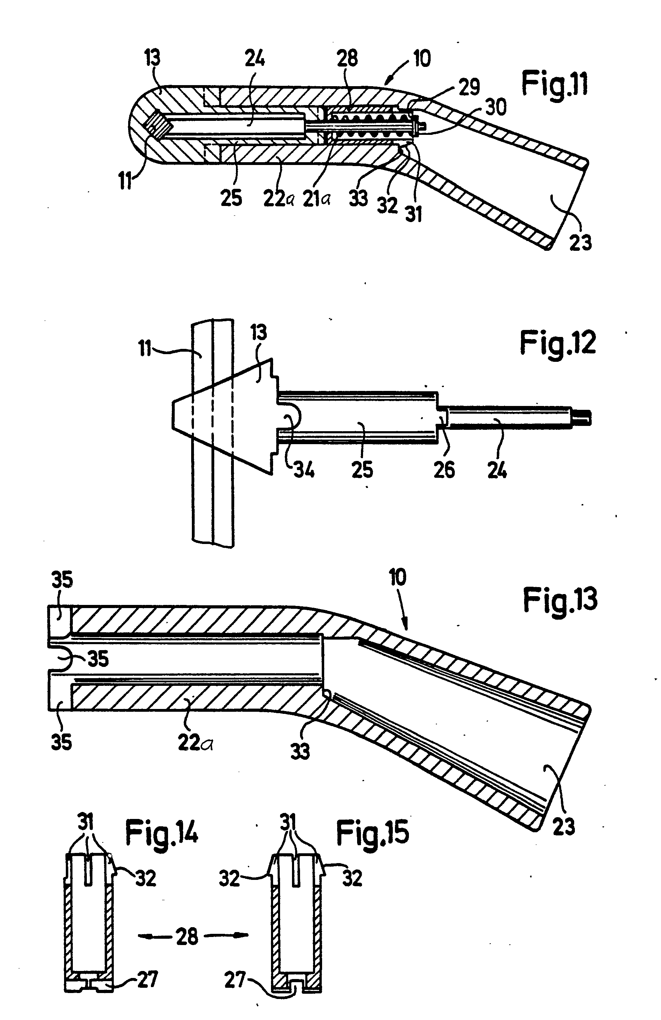

Fig. 11 einen senkrechten Schnitt durch das Verbindungsstück und dessen Verbindungsbereich mit der Achse;

Fig. 12 eine Draufsicht auf einen in dem Verbindungsstück angeordneten Lagerbolzen und dessen Verbindungsbereich mit der Achse;

Fig. 13 einen Längsschnitt durch den Schaft des Verbindungsstücks;

Fig. 14 einen Längsschnitt durch eine in dem Verbindungsstück angeordnete Aufnahmehülse;

Fig. 15 die Aufnahmehülse gemäß Fig. 14 in um 90° verdrehter Stellung.

Ein Handgerät weist einen Stiel 10 auf, der mit einer waagerechten zentralen Achse 11 verbunden ist, die einen eckigen, beispielsweise quadratischen Querschnitt aufweist. Auf diese zentrale Achse 11 sind V-förmig zueinanderstehende, paarweise in spitzen Winkeln angeordnete Lagerhülsen 9, die aus hartem Kunststoff bestehen können, aufgeschoben. Zwischen den Lagerhülsen 9 sind außerdem auf die Achse 11 Zwischenführungslager 12 und 13 aufgesteckt, die ebenfalls aus hartem Kunststoff bestehen können. An den Enden der zentralen Achse 11 befinden sich den Zwischenführungslagern 12, 13 entsprechende Endlager 14, deren äußere zur Achse 11 rechtwinklig angeordnete Stirnflächen 14a als Anschlagflächen für auf die Enden der Achse 11 aufgeschraubte Endmuttern 15 dienen.

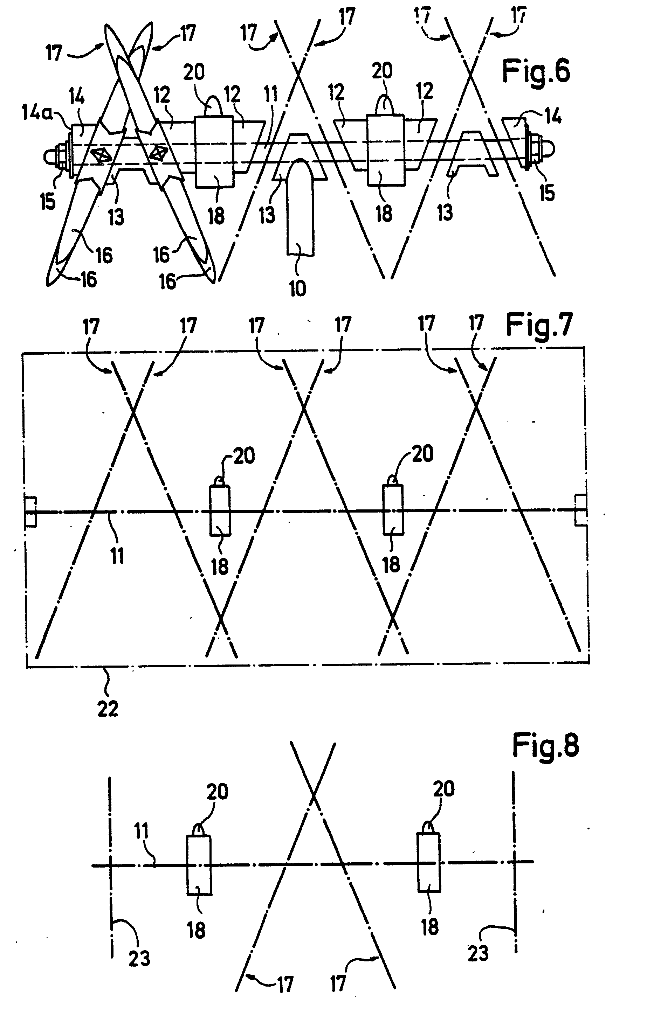

Auf jede Lagerhülse 9 ist ein mit mehreren radial abstehenden Sternzinken 16 ausgerüsteter Zinkenstern 17 so aufgesetzt, daß er sich um seine Achse frei drehen kann. Dabei bilden zwei benachbarte Zinkensterne 17 jeweils ein Paar sich kreuzender Zinkensterne 17, wobei die senkrechten, in Richtung der radialen Sternzinken 16 verlaufenden Mittelebenen der beiden benachbarten Zinkensterne einen spitzen Winkel bilden, also V-förmig angeordnet sind. Zu diesem Zweck müssen auch die Stirnseiten der Zwischenführungslager 12, 13 in einem entsprechenden Winkel zu der zentralen Achse 11 stehen, da die Lagerhülsen 9 der Zinkensterne 17 sich an den Zwischenführungslagern 12, 13 seitlich abstützen. Gemäß Fig. 6 der Zeichnung stehen die Endlager 14 mit ihren inneren Stirnseiten in einem solchen Winkel. Außerdem sind die beiden Stirnseiten der Zwischenführungslager 13 zwischen zwei Zinkensternen 17 winklig angestellt. Im mittleren Bereich der zentralen Achse 11 ist an einem solchen Zwischenführungslager 13 der Stiel 10 starr befestigt, beispielsweise angeschweißt.

Jeweils zwischen zwei Paaren von Zinkensternen 17 ist auf die zentrale Achse 11 eine koaxiale Lagerhülse 18 aufgesteckt, an der ein Schaufelzinken 19 starr befestigt, beispielsweise angeschweißt ist. Dieser verläuft in einer zur waagerechten zentralen Achse 11 senkrechten Ebene gekrümmt und endet an einer Unterseite in einer Schaufel 20. Dabei ragt die Schaufel 20 über den äußeren Endbereich der Sternzinken 16 hinaus, so daß es durch Verschwenken des Stieles 10 der damit undrehbar verbundenen zentralen Achse 11 und der auf der Achse 11 undrehbar angeordneten koaxialen Lagerhülsen 18 möglich ist, die Schaufeln 20 der Schaufelzinken 19 mehr oder weniger tief in den Erdboden einzustechen oder aber durch eine flache Anstellung des Stieles 10 die Schaufeln 20 außerhalb des Erdbodens zu halten.

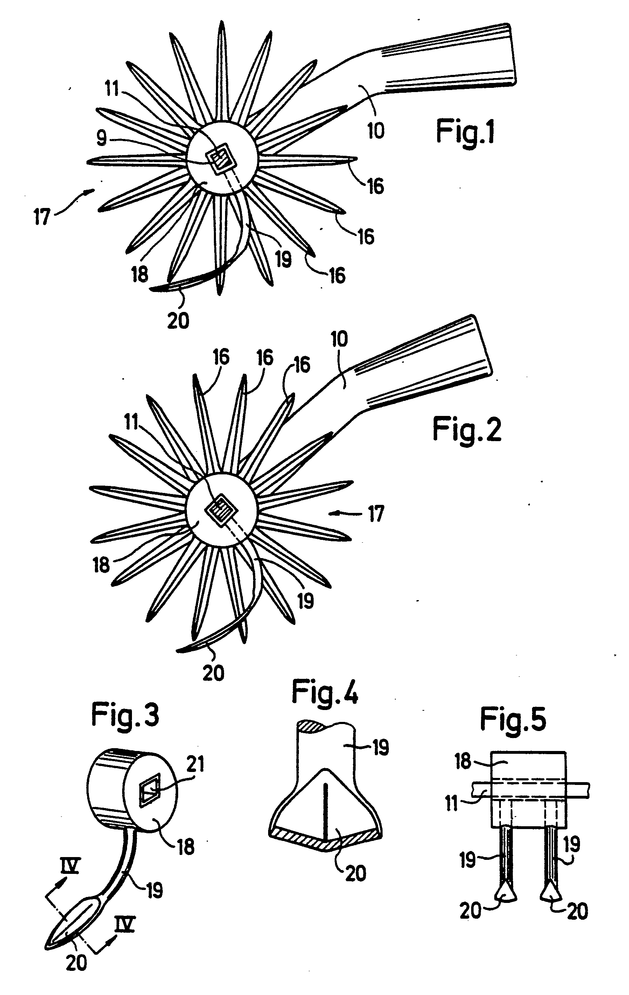

Von den zwischen einem Zinkenstern 17 und einer koaxialen Lagerhülse 18 angeordneten Zwischenführungslagern 12 hat jeweils die an der Lagerhülse 18 anliegende Stirnfläche eine zur zentralen Achse 11 rechtwinklige Anordnung, während ihre andere, an dem Zinkenstern 17 anliegende Stirnseite entsprechend der winkligen Anordnung des Zinkensterns 17 ebenfalls im Winkel zur zentralen Achse 11 verläuft. Alle Lagerhülsen für die Zinkensterne 17, die beiden Endlager 14, die Zwischenführungslager 12 und 13, sowie die koaxialen Lagerhülsen 18 haben durchgehende Öffnungen, deren Querschnitt dem Querschnitt der zentralen Achse 11 entspricht. Sie sind also passend auf die zentrale Achse 11 aufgesteckt. Da der Querschnitt der zentralen Achse 11 eckig ist, müssen sich diese Elemente mit einer Drehung der zentralen Achse 11 in gleicher Weise verschwenken. Eine solche eckige Mittelöffnung 21 der koaxialen Lagerhülse 18 ist in Fig. 3 der Zeichnung dargestellt. Diese Mittelöffnung 21 kann sowohl konzentrisch, als auch exzentrisch an der Lagerhülse 18 angeordnet sein. Bei einer exzentrischen (außermittigen) Anordnung der Mittelöffnung 21 kann der Effekt des sich Eingrabens der Schaufeln 20 in den Erdboden infolge einer Verschwenkung der zentralen Achse 11 verstärkt werden.

Gemäß Fig. 7 der Zeichnung ist die zentrale Achse 11 des Gerätes nicht mit einem Stiel verbunden, sondern sie wird von einem Rahmen 22 gehalten, an dem sie mit ihren beiden Enden befestigt ist und der alle Zinkensterne 17 umgibt. Dieser Rahmen 22 kann dann ähnlich, wie eine Egge, zur Bodenbearbeitung in waagerechter Richtung rechtwinklig zur zentralen Achse 11 gezogen werden. In diesem Ausführungsbeispiel kämmen nicht nur die beiden Zinkensterne 17 jeweils eines Paares miteinander, sondern es kämmen auch die beiden benachbarten Zinkensterne 17 von zwei benachbarten Paaren miteinander. Vom linken Rand aus kämmen also nicht nur der erste und der zweite Zinkenstern 17 sowie der dritte und der vierte Zinkenstern 17, sondern es kämmen auch der zweite und der dritte Zinkenstern 17 miteinander. Dabei ist zwischen dem aus dem ersten und dem zweiten Zinkenstern 17 gebildeten Paar und dem Paar, welches aus dem dritten und dem vierten Zinkenstern 17 gebildet ist, die koaxiale Lagerhülse 18 mit dem Schaufelzinken 19 angeordnet, dessen Schaufeln 20 das zwischen zwei Paaren befindliche Erdreich auflockern und diesen Paaren zuführen.

Gemäß Fig. 8 der Zeichnung ist an den beiden Enden der zentralen Achse 11 jeweils ein Begrenzungselement 23 rechtwinklig zur Achse 11 angeordnet, welches die Bearbeitungsbreite des Gerätes an der entsprechenden Außenseite begrenzt. Ein solches Begrenzungselement 23 kann ein Zinkenstern 17, ein umlaufendes Rad oder eine Kufe sein.

Mit Hilfe der Schaufeln 20 der Schaufelzinken 19, die auch, entsprechend einer Pflugschar mit Schar bezeichnet werden können, werden, je nach Stellung des Stiels 10, die Erdschollen zwischen den Paaren von Zinkensternen 17 mehr oder weniger angehoben und seitlich abgelegt. Diese Anordnung macht das Handgerät besonders für harten Boden geeignet.

Um die Schaufelzinken 19 mit den Schaufeln 20 in jedem Falle während der Bearbeitung außerhalb des Erdreichs zu halten, läßt sich die Achse 11 an dem Verbindungsstück 10 um 180° verschwenken, so daß die Schaufeln 20 nicht mehr in den Erdboden, sondern in entgegengesetzter Richtung in die Luft ragen. Zu diesem Zweck enthält das Verbindungsstück 10 einen von einer Druckfeder 21a in einer Einraststellung gehaltenen, jedoch gegen die Wirkung der Druckfeder verschiebbaren Schaft 22a, der sich nach der Verschiebung um seine Achse verdrehen läßt.

Die Verbindung zwischen der Achse 11 und dem den Stiel in einer konischen Öffnung 23 aufnehmenden Schaft 22a ist mit einem Lagerbolzen 24 hergestellt, der rechtwinklig von der Achse 11 absteht und an dieser mit einem Ende angeschweißt ist. Auf einem Teil seiner Länge ist der Lagerbolzen 24 von der Achse 11 ausgehend sechskantförmig ausgeführt und hier mit einer Kunststoffschicht umgeben, die zum Teil das Zwischenführungslager 13 im Bereich der Achse 11 und auf der übrigen Teillänge einen damit einstückig ausgeführten Mantel 25 bildet. An der von der Achse 11 abgewandten ringförmigen Stirnseite des Mantels 25 sind zwei erste Rastnasen 26 ausgebildet, die für den passenden Eingriff in ersten Rastnuten 27 einer in dem Schaft 22a angeordneten Aufnahmehülse 28 für die Druckfeder 21a vorgesehen sind.

Der weitere, nicht von dem Mantel 25 umgebene Teil der Länge des Lagerbolzens 24 befindet sich innerhalb der Aufnahmehülse 28 und ist dort von der Druckfeder 21a umgeben, wobei sich die Druckfeder mit ihrem der Achse 11 zugewandten Ende an der inneren stirnseitigen Ringfläche der Aufnahmehülse 28 abstützt. Das andere Ende der Druckfeder 21a ist an einer auf den Lager-bolzen 24 aufgesteckten Lagerscheibe 29 abgestützt, die wiederum von einem an dem Lagerbolzen 24 befestigten Ring 30 gehalten ist.

Die Aufnahmehülse 28 weist an ihrem von den ersten Rastnuten 26 abgewandten Ende mehrere axiale Mantelschlitze 31 auf. Zwischen den Mantelschlitzen sind die äußeren Oberflächen der Mantelteile als Schnäpper 32 ausgebildet. Auf diese Weise läßt sich die Aufnahmehülse 28 in axialer Richtung an einer ringförmigen Anlagefläche 33 innerhalb des Schaftes 22 abstützen. Die Mantelschlitze 31 ermöglichen eine federnde Bewegung der Schnäpper 32.

Das Zwischenführungslager 13 ist mit seiner Begrenzungsfläche an die der Achse 11 zugewandte Stirnseite des Schaftes 22a angepaßt. Es enthält hier abstehende zweite Rastnasen 34, die in entsprechende zweite Rastnuten 35 des Schaftes 22a passend eingreifen. Alle ersten Rastnasen 26 des Mantels 25 mit den zugehörigen ersten Rastnuten 27 der Aufnahmehülse 28 und alle zweiten Rast-nasen des Zwischenführungslagers 13 mit den zugehörigen zweiten Rastnuten 35 des Schaftes 22a sind in Umfangsrichtung um mindestens 90° zueinander versetzte angeordnet. Auf diese Weise kann das Verbindungsstück 10 gegenüber der Achse 11 vier jeweils um 90° verdrehte Stellungen einnehmen.

Zur Verstellung des Verbindungsstücks 10 gegenüber der Achse 11 wird der Schaft 22a von der Achse 11 fortgezogen, wobei er über die Anlagefläche 33 und die Schnäpper 32 die Aufnahmehülse 28 in axialer Richtung des Lagerbolzens 24 verschiebt. Diese Bewegung erfolgt somit entgegen der Wirkung der Druckfeder 21a in der Aufnahmehülse 28, so daß die Druckfeder 21a zusammengedrückt wird, da ihr von der Achse 11 abgewandtes Ende über die mit dem Ring 30 ein Längslager bildende Lagerscheibe 29 an dem Lagerbolzen 24 festgehalten wird. Bei der axialen Verschiebung des Schaftes 22a geraten sowohl die ersten Rastnasen 26 und die zugehörigen Rastnuten 27 der Aufnahemhülse 28 als auch die zweiten Rastnasen 34 und die zugehörigen Rastnuten 35 des Schaftes 22a außer Eingriff, so daß der Schaft 22a nun um den Mantel 25 und um die Achse des Lagerbolzens 24 drehbar ist. Nach einer Drehung von 90 bzw. 180° wird der Schaft 22a losgelassen, so daß die Druckfeder 21a ihn zur Achse 11 hindrückt, wodurch entsprechende Rastnuten und Rastnasen miteinander in Eingriff kommen, so daß die neue Stellung des Schaftes 22a gegenüber der Achse 11 befestigt und von der Druckfeder 21a gehalten ist.

**Patentansprüche**

1. Handgerät zum Auflockern, Schneiden und Krümeln von Gartenboden od. dgl., mit an einem Stiel (10) gehaltenen, zwischen zwei Paaren von sich kreuzenden, auf festen Lagerhülsen gelagerten und V-förmig zueinanderstehenden, frei drehbar gelagerten Zinkensternen (17), deren in Richtung der radialen Sternzinken (17) verlaufende senkrechte Mittelebenen sich unter einem spitzen Winkel schneiden, dadurch gekennzeichnet, daß jeweils zwischen den auf Lagerhülsen (18) gelagerten Zinkensternen ein von dem Stiel (10) gehaltener, in einer gebogenen Schaufel (20) auslaufender endseitig verbreiterter Schaufelzinken (19) angeordnet ist, der jeweils an einer zwischen zwei Paaren sich kreuzender Zinkensterne (17) angeordneten koaxialen Lagerhülse (18) starr befestigt ist, die auf der zentralen Achse (11) aufgesteckt ist.

2. Handgerät nach Anspruch 1, dadurch gekennzeichnet daß die Achsen der festen Lagerhülsen (18) V-förmig zueinanderstehen, und daß zwischen den Lagerhülsen (18) Zwischenführungslager (12, 13) angeordnet sind, die mit diesen auf einer waagerechten zentralen Achse (11) undrehbar und in Längsrichtung der Achse (11) verschiebbar aufgesteckt sind.

3. Handgerät nach den Ansprüchen 1 und 2, dadurch gekennzeichnet, daß die zentrale Achse (11) im Querschnitt eckig ausgebildet ist und die Lagerhülse (18) jedes Schaufelzinkens (19) sowie die Zwischenführungslager (12, 13) jeweils mit einer zentralen, eckigen, durchgehenden, im Querschnitt dem Achsenquerschnitt entsprechenden Mittelöffnung (21) versehen sind.

4. Handgerät nach den Ansprüchen 1 bis 3, dadurch gekennzeichnet, daß an einer koaxialen Lagerhülse (18) mehrere gleiche Schaufelzinken (19) in Achsrichtung hintereinander angeordnet sind.

5. Handgerät nach den Ansprüchen 1 bis 4, dadurch gekennzeichnet, daß die Mittelöffnung (21) an der achsparallelen Lagerhülse (18) des Schaufelzinkens (19) exzentrisch angeordnet ist.

6. Handgerät nach den Ansprüchen 1 bis 5, dadurch gekennzeichnet, daß an jedem Ende der zentralen Achse (11) rechtwinklig zu dieser ein die Bearbeitungsbreite begrenzender äußerer Zinkenstern (17) als Begrenzungselement (23) angeordnet ist.

7. Handgerät nach den Ansprüchen 1 bis 5, dadurch gekennzeichnet, daß an jedem Ende der zentralen Achse (11) rechtwinklig zu dieser ein die Bearbeitungsbereite begrenzendes umlaufendes äußeres Rad als Begrenzungselement (23) angeordnet ist.

8. Handgerät nach den Ansprüchen 1 bis 5, dadurch gekennzeichnet, daß an jedem Ende der Achse (11) rechtwinklig zu dieser eine die Bearbeitungsbreite begrenzende äußere Kufe als Begrenzungselement (23) angeordnet ist.

9. Handgerät nach den Ansprüchen 1 bis 8, dadurch gekennzeichnet, daß von vier auf der Achse (11) hintereinander aufgesteckten Zinkensternen (17), wovon jeweils der erste und der zweite sowie der dritte und der vierte ein sich kreuzendes Paar bilden, auch der zweite und der dritte Zinkenstern (17) sich kreuzen.

10. Handgerät nach den Ansprüchen 1 bis 9, dadurch gekennzeichnet, daß die zentrale Achse (11) mit ihren Enden an einem die Zinkensterne (17) umgebenden Rahmen (22) starr befestigt und in ihrem mittleren Bereich über ein Zwischenführungslager (13) an einem Stiel (10) undrehbar befestigt ist.

11. Handgerät nach den Ansprüchen 1 bis 10, dadurch gekennzeichnet, daß das an der Achse (11) rechtwinklig angrenzende Verbindungsstück (10) gegenüber dieser um seinen Schaft stufenweise um jeweils 90° verstellbar und an der Achse (11) arretierbar ist.

12. Handgerät nach den Ansprüchen 1 bis 11, dadurch gekennzeichnet, daß das Verbindungsstück (10) einen von seinem Schaft (22a) umgebenen, an der Achse (11) starr befestigten Lagerbolzen (24) enthält, der auf einem Teil seiner Länge von einer das Verbindungsstück (10) zur Achse (11) hindrückenden Druckfeder (21a) umgeben ist, wobei diese sich in einer Aufnahmehülse (28) befindet, in welcher sie sich mit ihrem der Achse (11) zugewandten Ende stirnseitig abstützt.

13. Handgerät nach den Ansprüchen 1 bis 12, dadurch gekennzeichnet, daß sich die Druckfeder (21a) mit ihrem von der Achse (11) abgewandten Ende an einer Lagerscheibe (29) stirnseitig abstützt, die gemeinsam mit einem an dem Lagerbolzen (24) befestigten Ring (30) ein Längslager bildet.

14. Handgerät nach den Ansprüchen 1 bis 13, dadurch gekennzeichnet, daß der Lagerbolzen (24) zwischen der Druckfeder (21a) und der Achse (11) mit einem zylindrischen Mantel (25) umgeben ist, an welchem der Schaft (22a) des Verbindungsstücks (10) gelagert und mit einem Ende an der Achse (11) unlösbar befestigt, wie angelötet oder angeschweißt ist.

15. Handgerät nach den Ansprüchen 1 bis 14, dadurch gekennzeichnet, daß die Aufnahmehülse (28) mit an ihrem von der Achse (11) abgewandten Ende ausgebildeten federnden Schnäppern (32) an einer ringförmigen Anlagefläche (33) des Schaftes (22a) axial abgestützt ist und an ihrer der Achse (11) zugewandten ringförmigen Stirnfläche mehrere in Umfangsrichtung um 90° versetzte erste Rastnuten (27) aufweist, in welche erste Rast-nasen (26) des Mantels (25) passend eingreifen.

16. Handgerät nach den Ansprüchen 1 bis 15, dadurch gekennzeichnet, daß der Schaft (22a) an seiner der Achse (11) zugewandten ringförmigen Stirnfläche mehrere in Umfangsrichtung um 90° versetzte zweite Rastnuten (35) aufweist, in welchen zweite Rastnasen (34) des Zwischenführungslagers (13) passend eingreifen.

## Claims

1. A hand implement for loosening, cutting and crumbling of horticultural ground or the like comprising prong stars (17) arranged betveen two pairs of intersecting prong stars, held on a handle (10) and supported on fixed bearing sleeves, said prong stars (17) being mounted in a freely rotatable manner and arranged relative to each other such that they define a V-shape, the perpendicular centre planes of said prong stars (17), which extend in the direction of the radial star prongs (17) intersecting at an acute angle, characterized in that a shovel prong (19), which is broadened at the end thereof and vhich terminates in a curved shovel (20), is arranged between the respective prong stars supported on said bearing sleeves (18), said shovel prong (19) being held by the handle (10) and being rigidly secured to a respective coaxial bearing sleeve (18), which is arranged betveen two pairs of intersecting prong stars (17) and which is attached to the central axle (11).

2. A hand implement according to claim 1, characterized in that the axes of the fixed bearing sleeves (18) define a V-shape, and that intermediate guide bearings (12, 13) are arranged between the bearing sleeves (18), said intermediate guide bearings plus said bearing sleeves being attached to a horizontal central axle (11) such that they cannot be rotated relative to said axle and such that they are adapted to be displaced in the longitudinal direction of said axle (11).

3. A hand implement according to claims 1 and 2, characterized in that the central axle (11) has a square cross-section and that the bearing sleeve (18) of each shovel prong (19) as well as the intermediate guide bearings (12, 13) are each provided with a central, square, continuous central opening (21) whose cross-section corresponds to the cross-section of the axle.

4. A hand implement according to claims 1 to 3, characterized in that one coaxial bearing sleeve (18) has arranged thereon several identical shovel prongs (19) which are provided one after the other in the axial direction.

5. A hand implement according to claims 1 to 4, characterized in that the central opening (21) is arranged eccentrically on the axially parallel bearing sleeve (18) of the shovel prong (19).

6. A hand implement according to claims 1 to 5, characterized in that each end of the central axle (11) has arranged thereon an outer prong star (17) as a boundary element (23), said outer prong star (17) being arranged at right angles to said axle (11) and delimiting the operating width.

7. A hand implement according to claims 1 to 5, characterized in that each end of the central axle (11) has arranged thereon a rotating outer wheel as a boundary element (23), said outer wheel being arranged at right angles to said axle (11) and delimiting the operating width.

8. A hand implement according to claims 1 to 5, characterized in that each end of the central axle (11) has arranged thereon an outer skid as a boundary element (23), said outer skid being arranged at right angles to said axle and delimiting the operating width.

9. A hand implement according to claims 1 to 8, characterized in that among four prong stars (17), which are attached to the axle (11) one after the other and the first and the second one of which as well as the third and the fourth one of which define an intersecting pair, the second and the third prong star (17) intersect as well.

10. A hand implement according to claims 1 to 9, characterized in that the central axle (11) has its ends rigidly connected to a frame (22) surrounding the prong stars (17) and that the central area of said axle (11) is fixed, via an intermediate guide bearing (13), to a handle (10) such that rotation relative thereto is prevented.

11. A hand implement according to claims 1 to 10, characterized in that the connection piece (10), which abuts on the axle (11) at right angles, is adapted to be stepwise adjusted, by 90° steps, about its shaft relative to said axle (11) and is adapted to be locked in position on said axle (11).

12. A hand implement according to claims 1 to 11, characterized in that the connection piece (10) includes a bearing pin (24) which is surrounded by the shaft (22a) of said connection piece and which is rigidly secured to the axle (11), said bearing pin (24) being, along part of its length, surrounded by a pressure spring (21a), which urges the connection piece (10) towards the axle (11) and which is located in a reception sleeve (28), the pressure spring end facing the axle (11) resting on an end face of said reception sleeve.

13. A hand implement according to claims 1 to 12, characterized in that the pressure spring end facing away from the axle (11) rests on the end face of a bearing disc (29) which defines a longitudinal bearing together with a ring (30) secured to the bearing pin (24).

14. A hand implement according to claims 1 to 13, characterized in that, between said pressure spring (21a) and the axle (11), the bearing pin (24) is surrounded by a cylindrical jacket (25) on which the shaft (22a) of the connection piece (10) is supported and secured in a non-realeasable manner, e. g. by soldering or welding, to the axle (11) with one end thereof.

15. A hand implement according to claims 1 to 14, characterized in that the reception sleeve (28) rests axially on an annular contact surface (33) of the shaft (22a) via spring-type latches (32) formed on the reception sleeve end which faces away from the axle (11) and that the annular end face of the reception sleeve facing the axle (11) is provided with several first locking grooves (27) which are displaced by 90° in the circumferential direction and which are in fitting engagement with first locking projections (26) of the jacket (25).

16. A hand implement according to claims 1 to 15, characterized in that, on its annular end face facing the axle (11), the shaft (22a) is provided with several second locking grooves (35) which are displaced by 90° in the circumferential direction and which are in fitting engagement with second locking projections (34) of the intermediate guide bearing (13).

## Revendications

1. Outil à main pour ameublir, découper et émietter la terre de jardins ou analogues, avec des étoiles de dents (17) fixées à un manche (10), pivotant librement, maintenues sur des manchons de roulement fixes, dont les axes sont en V entre eux, entre deux paires se croisant, dont les plans médians perpendiculaires dans la direction des dents radiales (17) se coupent à angle aigu, caractérisé en ce que, entre les étoiles de dents montées sur des manchons de roulement (18), est disposée une dent à spatule (19) élargie à l'extrémité, pour donner une spatule (20) incurvée maintenue sur le manche (10), dent qui est fixée rigidement sur un manchon de roulement (18) coaxial, disposé entre deux paires d'étoiles de dents (17) se croisant, le dit manchon étant lui-même poussé sur l'axe central (11).

2. Outil à main selon la revendication 1, caractérisé en ce que les axes des manchons de roulement fixes (18) sont en V l'un par rapport à l'autre, et en ce que des paliers-guides intermédiaires (12, 13) sont prévus entre les manchons de roulement (18) et sont montés avec ceux-ci sur un axe central horizontal (11), de manière à être fixes en rotation, et mobiles dans le sens longitudinal de l'axe (11).

3. Outil à main selon les revendications 1 et 2, caractérisé en ce que l'axe central (11) est de section polygonale, et le manchon de roulement (18) de chaque dent à spatule (19) ainsi que les paliers-guides intermédiaires (12, 13), sont chaque fois pourvus d'une ouverture centrale (21) polygonale correspondante, traversante, de la même section que la section de l'axe.

4. Outil à main selon les revendications 1 à 3, caractérisé en ce que plusieurs dents à spatules identiques (19) sont disposées sur un manchon de roulement coaxial (18) en sens axial l'une derrière l'autre.

5. Outil à main selon les revendications 1 à 4, caractérisé en ce que l'ouverture centrale (21) est disposée excentriquement sur le manchon de roulement parallèle à l'axe (18), de la dent à spatule (19).

6. Outil à main selon les revendications 1 à 5, caractérisé en ce que, à chaque extrémité de l'axe central (11), à angle droit par rapport à celui-ci, un groupement d'étoiles de dents (17) extérieures limitant la profondeur de travail du sol est disposé comme élément limiteur (23).

7. Outil à main selon les revendications 1 à 5, caractérisé en ce que, à chaque extrémité de l'axe central (111), à angle droit par rapport à celui-ci, une roue extérieure limitant la profondeur de travail du sol est disposée comme élément limiteur (23).

8. Outil à main selon les revendications 1 à 5, caractérisé en ce que, à chaque extrémité de l'axe (11), à angle droit par rapport à celui-ci, un patin extérieur limitant la largeur de travail du sol est disposé en tant qu'élément limiteur (23).

9. Outil à main selon les revendications 1 à 8, caractérisé en ce que, sur quatre groupements d'étoiles de dents (17) disposés l'un derrière l'autre sur l'axe 11, le premier et le deuxième, ainsi que le troisième et le quatrième, forment chaque fois une paire se croisant, le deuxième et le troisième groupe en étoile (17) se croisant également.

10. Outil à main selon les revendications 1 à 9, caractérisé en ce que l'axe central (11) est fixé rigidement par ses extrémités sur un cadre (22) entourant les étoiles de dents (17), et est fixé de manière non rotative sur un manche (10), dans sa zone médiane, via un palier-guide intermédiaire (13).

11. Outil à main selon les revendications 1 à 10, caractérisé en ce que l'élément de liaison (10), adjacent à angle droit par rapport à l'axe (11), est ajustable chaque fois jusqu'à 90° et progressivement par rapport à celui-ci autour de son corps et peut être calé sur l'axe (11).

12. Outil à main selon les revendications 1 à 11, caractérisé en ce que l'élément de liaison (10) comporte un axe de palier (24) fixé rigidement sur l'axe (11), entouré de son corps (22a) qui, sur une partie de sa longueur, est entouré d'un ressort de compression (21a) comprimant l'élément de liaison (10) vers l'axe (11), le dit ressort se trouvant dans une gaine de réception (28) dans laquelle il s'appuie par son extrémité tourné vers l'axe (11).

13. Outil à main selon les revendications 1 à 12, caractérisé en ce que le ressort de compression (21a) s'appuie sur la face d'about, par son extrémité opposée à l'axe (11), sur un disque de palier (29), lequel forme un palier longitudinal avec un anneau (30) fixé sur l'axe de palier (24).

14. Outil à main selon les revendications 1 à 13, caractérisé en ce que l'axe de palier (24) est entouré d'une enveloppe cylindrique (25) entre le ressort de compression (21a) et l'axe (11), sur laquelle le corps (22a) de l'élément de liaison (10) s'appuie et est fixé de manière inamovible par une extrémité sur l'axe (11) par exemple par brasage ou par soudage.

15. Outil à main selon les revendications 1 à 14, caractérisé en ce que le manchon de réception (28), s'appuie axialement, par son accouplement à déclic (32) réalisé à son extrémité opposée à l'axe (11), sur une surface d'appui circulaire (33) du corps (22a), et que la surface frontale circulaire tournée vers l'axe (11) présente plusieurs encoches (27) décalées à 90° en sens périphérique, encoches dans lesquelles s'adaptent des premiers nez d'arrêt (26) de l'enveloppe (25).

16. Outil à main selon les revendications 1 à 15, caractérisé en ce que le corps (22a) présente sur sa surface d'about circulaire tournée vers l'axe (11) plusieurs deuxièmes encoches (35) décalées de 90° en sens périphérique, dans lesquelles s'adaptent des deuxièmes nez d'arrêt (34) du palier-guide intermédiaire (13).

Fig.1

Fig.2

Fig.3

Fig.4

Fig.5

Fig.6

Fig.7

Fig.8

Fig.9

Fig.10

Fig.11

Fig.12

Fig.13

Fig.14
Fig.15